# DEMANDE DE BREVET EUROPEEN

(11) **EP 4 800 492 A1**
(43) Date de publication de la demande: **02.09.2026**
(21) Numéro de dépôt: 25160353.6
(22) Date de dépôt: 26.02.2025
(51) Int. Cl.: G04D 7/00, G04D 7/12

(54) **PROCÉDÉ DE MISE À L'HEURE D'UNE MONTRE DISPOSÉE SUR UN SUPPORT, METTANT EN OEUVRE DES RÉSEAUX NEURONAUX**

(71) Demandeur: Montres Breguet S.A., 1344 L'Abbaye (CH)
(72) Inventeur: FAVRE, Jérôme, 2000 Neuchâtel (CH); KISSLING, Gregory, 2520 La Neuveville (CH); BILLOD, Antoine, 25130 Villers-le-Lac (FR)
(74) Mandataire: ICB SA

(57) **Abrégé**

L'invention concerne un procédé de mise à l'heure d'une montre (10) disposée sur un support (20), selon une heure de référence donnée par une horloge de référence, comprenant les étapes suivantes :
- acquisition 200 par un système de vision (30) d'une image de la montre (10), cette dernière constituant une image de référence, et
- détermination 300 de l'heure indiquée par la montre (10) sur l'image de référence grâce à un modèle de reconnaissance d'images mettant en œuvre au moins un réseau de neurones entraîné à partir d'une banque de données (50) comportant des images de montres labellisées, différentes les unes des autres et dont chaque label comporte des informations représentatives de l'heure indiquée par la montre (10) représentée sur l'image auquel il est associé,
- mise à l'heure 500 de la montre (10) par entraînement en rotation oscillatoire du support (20) sur lequel est disposée la montre (10), à une fréquence destinée à ralentir ou accélérer la marche de la montre (10) de sorte qu'elle atteigne l'heure de référence.

## Description

### Domaine technique de l'invention

L'invention relève du domaine de l'horlogerie et concerne en particulier un procédé de mise à l'heure d'une montre disposée sur un support, mettant en œuvre des réseaux neuronaux.

### Arrière-plan technologique

Les documents EP4095623 et WO2012126978A1 décrivent des remontoirs destinés à recevoir une montre et conçus pour la mettre à l'heure. A cet effet, ces remontoirs mettent en œuvre des méthodes de lecture de l'heure indiquée par la montre qu'ils supportent, en réalisant une acquisition de l'image de l'avant de la montre, c'est-à-dire du cadran et des aiguilles, et en déterminant la position des aiguilles. Cette approche présente l'avantage d'être relativement simple à mettre en œuvre et est robuste lorsque le modèle de la montre concernée et que les conditions de luminosité ne varient pas.

Toutefois, cette méthode de lecture de l'heure est inopérante lorsqu'il s'agit de lire l'heure indiquée par une montre dont l'image n'a pas été préalablement stockée dans la banque d'images. Par ailleurs, cette méthode n'autorise pas de variation des conditions de luminosité pour pouvoir être mise en œuvre.

Il existe un besoin de bénéficier d'une méthode de lecture de l'heure affichée par une montre, quel que soit le modèle de celle-ci, c'est-à-dire, quel que soit son aspect, et quelles que soient les conditions de luminosité dans lesquelles la montre se trouve lorsque l'on souhaite connaitre l'heure qu'elle affiche.

### Résumé de l'invention

À cet effet, l'invention concerne un procédé de mise à l'heure d'une montre disposée sur un support, selon une heure de référence donnée par une horloge de référence, comprenant les étapes suivantes :
- acquisition par un système de vision d'une image de la montre, cette dernière constituant une image de référence, et
- détermination de l'heure indiquée par la montre sur l'image de référence grâce à un modèle de reconnaissance d'images mettant en œuvre au moins un réseau de neurones entraîné à partir d'une banque de données comportant des images de montres labellisées, différentes les unes des autres et dont chaque label comporte des informations représentatives de l'heure indiquée par la montre représentée sur l'image auquel il est associé,
- mise à l'heure de la montre par entraînement en rotation oscillatoire du support sur lequel est disposée la montre, à une fréquence destinée à ralentir ou accélérer la marche de la montre de sorte qu'elle atteigne l'heure de référence.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, le procédé comporte une étape de vérification de la cohérence du résultat obtenu à la suite de l'étape de détermination, comprenant :
- une campagne d'opérations successives de détermination de l'heure indiquée par la montre à plusieurs instants T₀,..., Tₙ durant un intervalle de temps prédéfini, chaque instant étant caractérisé par une heure de référence connue,
- une opération de comparaison dans laquelle, pour chaque instant T₀,..., Tₙ l'heure déterminée est comparée à l'heure de référence de sorte à obtenir une valeur représentative de l'écart entre l'heure déterminée et l'heure de référence,
- une opération de validation dans laquelle, si pour au moins l'un des instants T₀,..., Tₙ la valeur représentative de l'écart entre l'heure déterminée et l'heure de référence est supérieur à une valeur seuil, il n'est pas tenu compte du résultat obtenu à la suite de l'étape de détermination et l'étape de vérification est remise en œuvre.

Dans des modes particuliers de réalisation, afin de créer la banque de données, des photographies d'une montre sont réalisées à intervalles réguliers pendant une durée prédéterminée de sorte à obtenir un nombre d'images désiré, et à chaque image est attribuée une donnée représentative de l'heure indiquée par la montre représentée par l'image de référence.

Dans des modes particuliers de réalisation, la montre est une montre mécanique entrainée par un support dans un mouvement de rotation oscillatoire à une fréquence nominale correspondant à une fréquence théorique à laquelle est censé osciller l'oscillateur de la montre.

Dans des modes particuliers de réalisation, l'étape de détermination comporte une opération de détection de la présence d'une montre sur le support, la mise en œuvre de l'étape de détermination étant poursuive si l'opération de détection détecte la présence d'une montre, et n'étant pas poursuivie dans le cas contraire.

Dans des modes particuliers de réalisation, l'opération de détection de la présence d'une montre sur le support est mise en œuvre par un réseau de neurones spécifique.

Dans des modes particuliers de réalisation, l'étape de détermination comporte une opération de transformation géométrique de l'image de référence par un réseau de neurones propre.

Dans des modes particuliers de réalisation, l'étape de détermination comporte une opération d'identification de l'heure et de la minute indiquées par la montre sur l'image de référence par un réseau de neurones propre associant ladite image de référence à une classe d'un ensemble de classes regroupant chaque combinaison possible d'heure et de minute.

Dans des modes particuliers de réalisation, l'étape de détermination comporte une opération d'identification des secondes indiquée par la montre sur l'image de référence par un réseau de neurones propre associant ladite image de référence à une classe d'un ensemble de classes regroupant soixante valeurs différentes représentant les secondes successives constituant une minute.

Dans des modes particuliers de réalisation, l'horloge de référence est formée par une montre de référence, l'heure de référence étant déterminée par le modèle de reconnaissance d'images à la suite d'une étape d'acquisition d'une image de la montre de référence par le système de vision.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente schématiquement un support sur lequel est disposée une montre destinée à être mise à l'heure par la mise en œuvre du procédé selon l'invention,
- la figure 2 représente un logigramme des étapes d'un exemple de mise en œuvre du procédé selon l'invention.

On note que les figures ne sont pas nécessairement dessinées à l'échelle pour des raisons de clarté.

### Description détaillée de l'invention

L'invention concerne un procédé de mise à l'heure d'une montre 10 disposée sur un support 20, selon une heure de référence indiquée par une horloge de référence. Dans un premier temps, lors de la mise en œuvre du procédé selon l'invention, il est cherché à obtenir l'heure indiquée par la montre 10. L'heure de référence correspond par exemple à l'heure courante et est donnée par une horloge atomique, une montre de référence, etc.

Le procédé comporte à cet effet, une étape d'acquisition 200 par un système de vision 30 d'une image de la montre 10 dont l'heure qu'elle indique est à déterminer. L'image de la montre 10 constitue une image de référence pour la suite du procédé.

Le système de vision 30 est connu de l'homme du métier et est, par exemple, notamment formé par une caméra ou par un appareil photographique. L'image acquises est enregistrée dans une mémoire par une unité de traitement de données 40, tel qu'un processeur.

Par la suite, une étape de détermination 300 de l'heure indiquée par la montre 10 sur l'image de référence est mise en œuvre par l'unité de traitement de données 40, grâce à un modèle de reconnaissance d'images mettant en œuvre au moins un réseau de neurones entraîné à partir d'une banque de données 50.

La banque de donnée 50 est générée lors d'une étape de création 100 préalable et comporte des images de montres, toutes différentes les unes des autres. Les images sont labellisées de telle sorte que chaque label comporte des informations représentatives de l'heure indiquée par la montre représentée sur l'image auquel il est associé.

Les images peuvent être générées par un algorithme de génération d'images et/ou par des prises de photographies d'une montre en fonctionnement.

En particulier, les photographies peuvent être réalisées à intervalles réguliers pendant une durée prédéterminée de sorte à obtenir un nombre d'images désiré.

Dans ce cas, la marche de la montre peut avantageusement être asservie à une fréquence nominale, correspondant à la fréquence théorique à laquelle est censé osciller l'oscillateur de la montre, c'est-à-dire l'ensemble balancier-spiral, afin de maitriser la marche de la montre et de garantir sa précision chronométrique. Un exemple d'un tel asservissement est décrit dans le document EP3410235.

L'étape de détermination 300 peut avantageusement comporter une opération de détection 301 de la présence d'une montre 10 sur le support 20. L'opération de détection 301 de la présence d'une montre 10 sur le support 20 peut être mis en œuvre par un réseau de neurones spécifique ou par des capteurs reliés à l'unité de traitement de données 40. Le résultat de l'opération de détection 301 conditionne la réalisation de l'étape de détermination 300, telle que décrite plus en détail ci-après.

Pour augmenter les chances de succès de déterminer de façon exacte l'heure indiquée par la montre 10, et ce quelle que soit sa position par rapport au système de vision 30, l'étape de détermination 300 peut avantageusement comporter, à la suite de l'opération de détection 301 le cas échéant, une opération de transformation géométrique 302 de l'image de référence par un réseau de neurones propre. Un tel réseau de neurones est connu sous la dénomination anglaise « Spatial Transformer Networks ». L'opération de transformation géométrique 302 de l'image de référence est exécutée si l'opération de détection 301 détecte la présence d'une montre 10, et n'est pas exécutée dans le cas contraire.

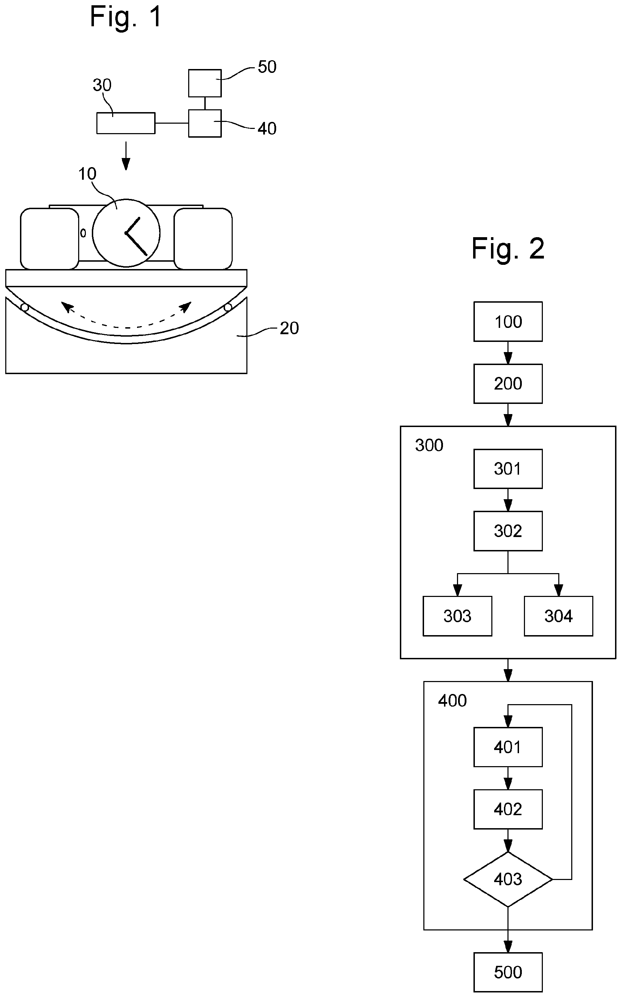

Avantageusement, comme le montre la figure 2, l'étape de détermination 300 peut comporter une opération d'identification de l'heure et de la minute 303 indiquées par la montre 10 sur l'image de référence, par un réseau de neurones spécifique associant ladite image de référence à une classe d'un ensemble de classes. Ces classes correspondent chacune à l'une des combinaisons possibles d'une heure parmi douze heures et de soixante minutes, soit sept cent vingt classes.

Lors de cette opération d'identification de l'heure et de la minute 303, la seconde indiquée par la montre 10 sur l'image de référence n'est pas identifiée.

En effet, la seconde est avantageusement identifiée lors d'une opération d'identification de la seconde 304, distincte, par un réseau de neurones propre associant ladite image de référence à une classe d'un ensemble de classes regroupant soixante valeurs différentes représentant les secondes successives constituant une minute.

Le fait de traiter séparément la détermination du couple heure-minute et de la seconde permet, d'une part de pouvoir minimiser la taille de la banque de données 50, et de minimiser les ressources nécessaires à la mise en œuvre des réseaux de neurones pour l'identification de la minute, de l'heure et de la seconde indiquées par la montre 10. D'autre part, le réseau de neurones spécifique pour l'identification de la seconde est davantage performant dans le sens où il est spécialisé et peut identifier la seconde quel que soit le type d'affichage de secondes dont est dotée la montre 10, par exemple une petite seconde dans un sous cadran ou une seconde centrale, et quelle que soit l'aspect du sous-cadran ou du cadran.

Préférentiellement, tel que le montre la figure 2, le procédé selon l'invention comporte une étape de vérification 400 de la cohérence du résultat obtenu à la suite de l'étape de détermination 300.

Cette étape de vérification 400 est exécutée par la mise en œuvre d'une campagne d'opérations successives 401 de détermination de l'heure indiquée par la montre 10 à plusieurs instants T₀,..., Tₙ durant un intervalle de temps prédéfini. Les instants T₀,..., Tₙ sont distants les uns des autres selon des durées choisies, identiques les unes des autres ou non, par exemple de quelques secondes, par exemple entre cinq et dix secondes. A titre d'exemple, n = 3, de sorte que la campagne comporte quatre opérations successives de détermination de l'heure indiquée par la montre 10. Chaque instant T₀,..., Tₙ est caractérisé par une heure de référence connue, donnée par une horloge de référence, telle qu'une montre de référence, une horloge atomique, etc.

A la suite de la campagne d'opérations successives 401 de détermination de l'heure indiquée par la montre 10, une opération de comparaison 402 est mise en œuvre, dans laquelle, pour chaque instant T₀,..., Tₙ l'heure déterminée est comparée à l'heure de référence de sorte à obtenir une valeur représentative de l'écart entre l'heure déterminée et l'heure de référence.

L'étape de vérification 400 comporte ensuite une opération de validation 403 consistant à mettre de nouveau en œuvre la campagne d'opérations successives 401 tout en ignorant le résultat obtenu lors de l'étape de détermination 300, tant que pour au moins l'un des instants T₀,..., Tₙ la valeur représentative de l'écart entre l'heure déterminée et l'heure de référence est supérieure à une valeur seuil. Le nombre d'occurrences n = 3 permet d'éliminer toute probabilité que l'heure déterminée corresponde par hasard à l'heure de référence, tout en limitant au maximum le nombre d'opérations et ainsi la durée de la campagne d'opérations successives 401.

Si la valeur représentative de l'écart entre l'heure déterminée et l'heure de référence est inférieure à la valeur seuil, le résultat obtenu lors de l'étape de détermination 300 est alors validé et la mise en œuvre du procédé selon l'invention est poursuivi.

Grace à l'étape de vérification 400, il est assuré que l'heure déterminée lors l'étape de détermination 300 correspond exactement à l'heure réellement indiquée par la montre 10.

Dans un second temps, la montre 10 est mise à l'heure.

La mise à l'heure de la montre 10 peut être réalisée en asservissant la marche de la montre 10, et en particulier la fréquence de fonctionnement de son oscillateur.

Plus précisément, la montre 10 est mise à l'heure lors d'une étape de mise à l'heure 500 en entraînant en rotation oscillatoire, le support 20 sur lequel est disposée la montre 10 à mettre à l'heure, à une fréquence destinée à ralentir ou à accélérer sa marche de sorte qu'elle atteigne l'heure de référence. Plus précisément, la fréquence de fonctionnement de l'oscillateur de la montre 10 est augmentée ou diminuée jusqu'à ce que l'heure indiquée par la montre 10 corresponde à l'heure de référence, c'est-à-dire préférentiellement l'heure courante.

Cette étape de mise à l'heure 500 peut impliquer de mettre en œuvre, préférentiellement de manière continue l'étape de détermination 300 de sorte à pouvoir identifier le moment dans lequel la montre 10 atteindra l'heure de référence. Alternativement, la durée de réalisation de l'étape de mise à l'heure 500 est calculée sur la base de la différence entre l'heure indiquée par la montre 10 et l'heure de référence, en prenant en compte le fait que l'heure de référence évolue au fil du temps et de la vitesse de correction de l'heure indiquée par la montre 10.

Il y a lieu de noter que la mise à l'heure peut être réalisée en en agissant sur des organes de commande de la montre, tels qu'une couronne ou un poussoir, par des moyens de liaison appropriés commandés par l'unité de traitement de données 40.

Une fois la mise à l'heure de la montre 10 réalisée, le support 20 peut être entraînée de sorte à osciller selon la fréquence nominale, afin de permettre à la montre 10 de conserver une excellente précision chronométrique.

De manière connue de l'état de la technique, la fréquence nominale est déterminée grâce à la mesure de la fréquence d'oscillation de l'oscillateur de la montre 10 par un capteur de vibrations adapté, par exemple un microphone ou un capteur de contact, en comparaison avec plusieurs valeurs prédéterminées, par exemple 2,5 Hz, 3 Hz et 4 Hz, mémorisées dans une unité de stockage. Ces valeurs prédéterminées représentent des fréquences de référence potentielles. A titre d'exemple, la valeur prédéterminée la plus proche de la valeur de la fréquence de l'oscillateur mesurée est choisie comme valeur de fréquence nominale par l'unité de traitement de données 40.

Dans un exemple de réalisation de l'invention, l'horloge de référence est une montre de référence, et l'heure de référence est déterminée par le modèle de reconnaissance d'images décrit précédemment à la suite d'une étape d'acquisition d'une image de la montre de référence par le système de vision 30. L'image de la montre de référence peut être acquise par la même caméra que celle permettant d'acquérir l'image de la montre 10, ou elle peut être acquise par caméra spécifique. Il est évident que l'étape de détermination est exécutée avant l'étape de mise à l'heure 500 de la montre 10.

Dans cet exemple de réalisation, la montre de référence présente avantageusement une précision chronométrique sensiblement supérieure de celle de la montre 10 à mettre à l'heure.

La configuration et l'agencement des composants électroniques ne sont pas décrits en détail dans le présent texte dans la mesure où ils sont en tant que tels à la portée de l'homme du métier.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, plusieurs montres peuvent être mises à l'heure de manière concomitante par la mise en œuvre du présent procédé, selon une heure de référence donnée par une même horloge de référence.

Il y a également lieu de noter que le procédé de mise à l'heure tel que décrit ci-dessus peut être mis en œuvre parallèlement à un remontage optimisé de la ou des montres, de façon qu'elles soient toujours prêtes à être utilisées par le porteur, tel que mentionné dans les documents EP3410235, EP3410236 et EP3422119.

## Revendications

1. Procédé de mise à l'heure d'une montre (10) disposée sur un support (20), selon une heure de référence donnée par une horloge de référence, comprenant les étapes suivantes :
- acquisition 200 par un système de vision (30) d'une image de la montre (10), cette dernière constituant une image de référence, et
- détermination 300 de l'heure indiquée par la montre (10) sur l'image de référence grâce à un modèle de reconnaissance d'images mettant en œuvre au moins un réseau de neurones entraîné à partir d'une banque de données (50) comportant des images de montres labellisées, différentes les unes des autres et dont chaque label comporte des informations représentatives de l'heure indiquée par la montre (10) représentée sur l'image auquel il est associé,
- mise à l'heure 500 de la montre (10) par entraînement en rotation oscillatoire du support (20) sur lequel est disposée la montre (10), à une fréquence destinée à ralentir ou accélérer la marche de la montre (10) de sorte qu'elle atteigne l'heure de référence.

2. Procédé selon la revendication 1, comportant une étape de vérification 400 de la cohérence du résultat obtenu à la suite de l'étape de détermination 300, comprenant :
- une campagne d'opérations successives 401 de détermination de l'heure indiquée par la montre (10) à plusieurs instants T₀,..., Tₙ durant un intervalle de temps prédéfini, chaque instant étant **caractérisé par** une heure de référence connue,
- une opération de comparaison 402 dans laquelle, pour chaque instant T₀,..., Tₙ l'heure déterminée est comparée à l'heure de référence de sorte à obtenir une valeur représentative de l'écart entre l'heure déterminée et l'heure de référence,
- une opération de validation 403 dans laquelle, si pour au moins l'un des instants T₀,..., Tₙ la valeur représentative de l'écart entre l'heure déterminée et l'heure de référence est supérieur à une valeur seuil, il n'est pas tenu compte du résultat obtenu à la suite de l'étape de détermination 300 et l'étape de vérification 400 est remise en œuvre.

3. Procédé selon l'une des revendications 1 ou 2, dans lequel afin de créer la banque de données (50), des photographies d'une montre sont réalisées à intervalles réguliers pendant une durée prédéterminée de sorte à obtenir un nombre d'images désiré, et à chaque image est attribuée une donnée représentative de l'heure indiquée par la montre représentée par l'image de référence.

4. Procédé selon la revendication 3, dans lequel la montre est une montre mécanique entrainée par un support (20) dans un mouvement de rotation oscillatoire à une fréquence nominale correspondant à une fréquence théorique à laquelle est censé osciller l'oscillateur de la montre.

5. Procédé selon l'une des revendications 1 à 4, dans lequel l'étape de détermination 300 comporte une opération de détection 301 de la présence d'une montre (10) sur le support (20), la mise en œuvre de l'étape de détermination 300 étant poursuive si l'opération de détection 301 détecte la présence d'une montre (10), et n'étant pas poursuivie dans le cas contraire.

6. Procédé selon la revendication 5, dans lequel l'opération de détection 301 de la présence d'une montre (10) sur le support (20) est mise en œuvre par un réseau de neurones spécifique.

7. Procédé selon l'une des revendications 1 à 6, dans lequel l'étape de détermination 300 comporte une opération de transformation géométrique 302 de l'image de référence par un réseau de neurones propre.

8. Procédé selon l'une des revendications 5 à 7, dans lequel l'étape de détermination 300 comporte une opération d'identification de l'heure et de la minute 303 indiquées par la montre (10) sur l'image de référence par un réseau de neurones propre associant ladite image de référence à une classe d'un ensemble de classes regroupant chaque combinaison possible d'heure et de minute.

9. Procédé selon l'une des revendications 5 à 8, dans lequel l'étape de détermination 300 comporte une opération d'identification des secondes 304 indiquée par la montre (10) sur l'image de référence par un réseau de neurones propre associant ladite image de référence à une classe d'un ensemble de classes regroupant soixante valeurs différentes représentant les secondes successives constituant une minute.

10. Procédé selon l'une des revendications 1 à 9, dans lequel l'horloge de référence est formée par une montre de référence, l'heure de référence étant déterminée par le modèle de reconnaissance d'images à la suite d'une étape d'acquisition d'une image de la montre de référence par le système de vision (30).
